# EUROPÄISCHE PATENTANMELDUNG

(11) **EP 2 012 074 A2**
(43) Veröffentlichungstag der Anmeldung: **07.01.2009**
(21) Anmeldenummer: 08011661.9
(22) Anmeldetag: 27.06.2008
(51) Int. Cl.: F24J 2/20, F24J 2/46

(54) **Sammelrohr für einen im Rollbondverfahren hergestellten Solarabsorber**

(30) Priorität: 02.07.2007 AT 10122007
(71) Anmelder: Vaillant GmbH, 42859 Remscheid (DE)
(72) Erfinder: Zöllner, Thomas, 42109 Wuppertal (DE)
(74) Vertreter: Hocker, Thomas

(57) **Zusammenfassung**

Sammlerrohr (1) eines im Rollbondverfahren hergestellten Solarabsorbers (4), wobei das Sammlerrohr (1) aus mehreren parallel verlaufenden Rohren (2), welche über Verbindungen (3) miteinander verbunden sind, besteht.

## Beschreibung

Die Erfindung bezieht sich auf ein Sammelrohr für einen im Rollbondverfahren hergestellten Solarabsorber.

In einem Solarabsorber wird Wasser oder ein Wasser-Glykol-Gemisch von Sonnenenergie aufgeheizt, um dann anschließend für Brauch- und Heizwasserzwecke verwendet zu werden.

Beim Rollbondverfahren werden unter starkem Druck zwei Blechplatten miteinander verschweißt. An Stellen, an denen später Leitungen sein sollen, wird hierbei ein Mittel aufgetragen, dass das Verschweißen verhindert. Nach der Verschweißung werden die nicht miteinander verschweißten Stellen durch das Beaufschlagen mit einem sehr hohen Druck aufgeweitet, so dass sich Blechplattenpaare mit darin liegenden Leitungen ergeben.

Bei üblichen Solarabsorbern sind Sammelrohre mit einem Durchmesser von etwa 20 mm erforderlich, um die entsprechenden Volumenströme führen zu können. Diese sind im Rollbondverfahren nicht fertigbar. Gemäß dem Stand der Technik müssen somit Sammelrohre mit den Absorbern verschweißt werden.

Aus DE 20 2006 016 100 U1 ist ein Rollbondabsorber bekannt, bei dem der Querschnitt der Rücklaufleitung größer als derjenige der übrigen Kollektor-Rohrleitungen ist. Hier gibt es jedoch fertigungstechnisch bedingte Grenzen.

Der Erfindung liegt somit die Aufgabe zugrunde, ein Sammelrohr für einen Rollbond-Solarabsorber zu schaffen, welches ebenfalls im Rollbondverfahren hergestellt werden kann.

Dies wird gemäß den Merkmalen des Anspruchs 1 dadurch erreicht, dass entweder das Sammelrohr aus mehreren parallel verlaufenden Rohren oder einem flachen, breiten Rohr besteht.

Gemäß den Merkmalen des abhängigen Anspruchs 2 kann ein Solarkollektor aus mehreren in Serie geschalteten Solarabsorbern bestehen.

Die Erfindung wird nun anhand der Figuren detailliert erläutert. Hierbei zeigt
Fig. 1 einen erfindungsgemäßen Solarabsorber,
Fig. 2 ein Detail hieraus,
Fig. 3 ein Detail einer alternativen Lösung,
Fig. 4 ein zweiter erfindungsgemäßer Solarabsorber sowie
Fig. 5 eine Serienschaltung erfindungsgemäßer Solarabsorber.

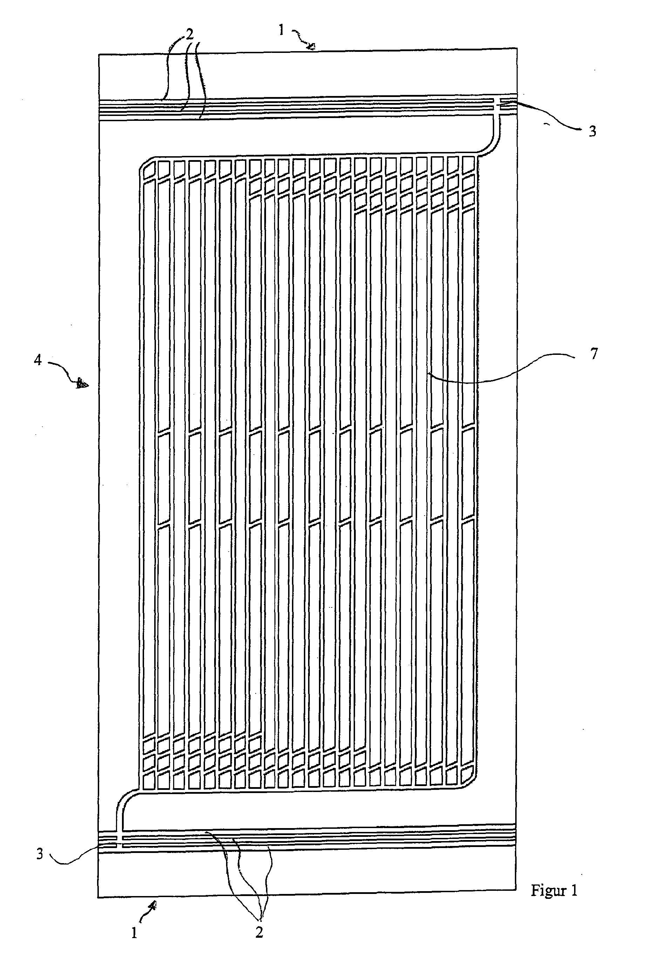

Figur 1 zeigt einen Solarabsorber 4 mit Sammelrohren 1, bestehend aus 3 parallel verlaufenden Rohren 2, welche über Verbindungen 3 miteinander verbunden sind. Die Kollektorfläche 7 ist mit den beiden Sammelrohren 1 verbunden.

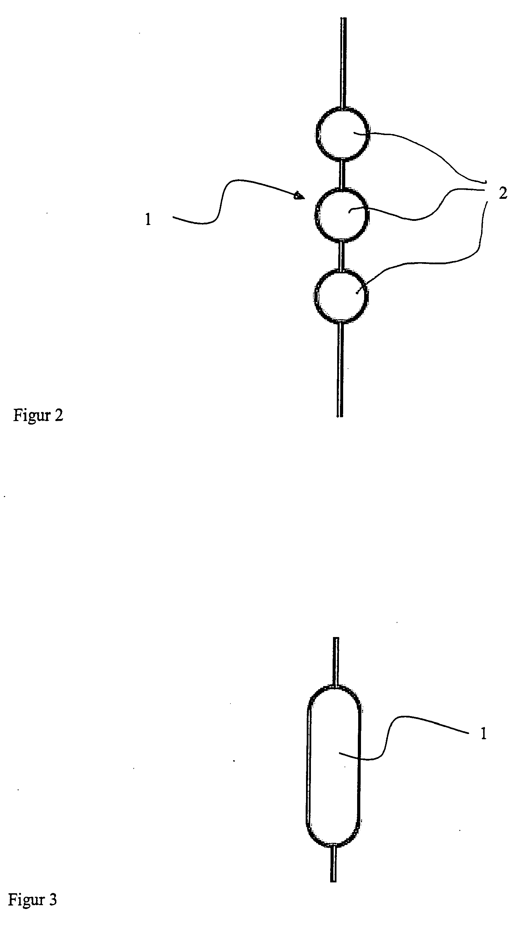

Figur 2 zeigt das Sammelrohr 1 mit den parallel verlaufenden Rohren 2. Zwischen den parallel verlaufenden Rohren 2 sind die Bleche des Solarabsorbers 4 miteinander verschweißt.

Figur 3 zeigt ein flaches, breites Rohr 1 als Sammelrohr.

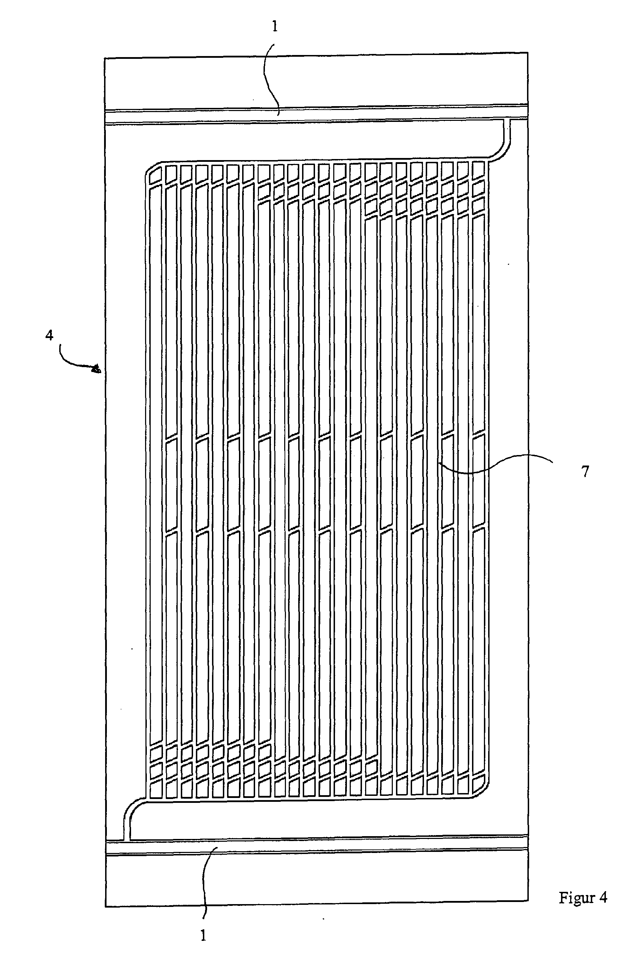

Figur 4 zeigt einen Solarabsorber 4 mit einem breiten, flachen Sammelrohr 1 gemäß Figur 3.

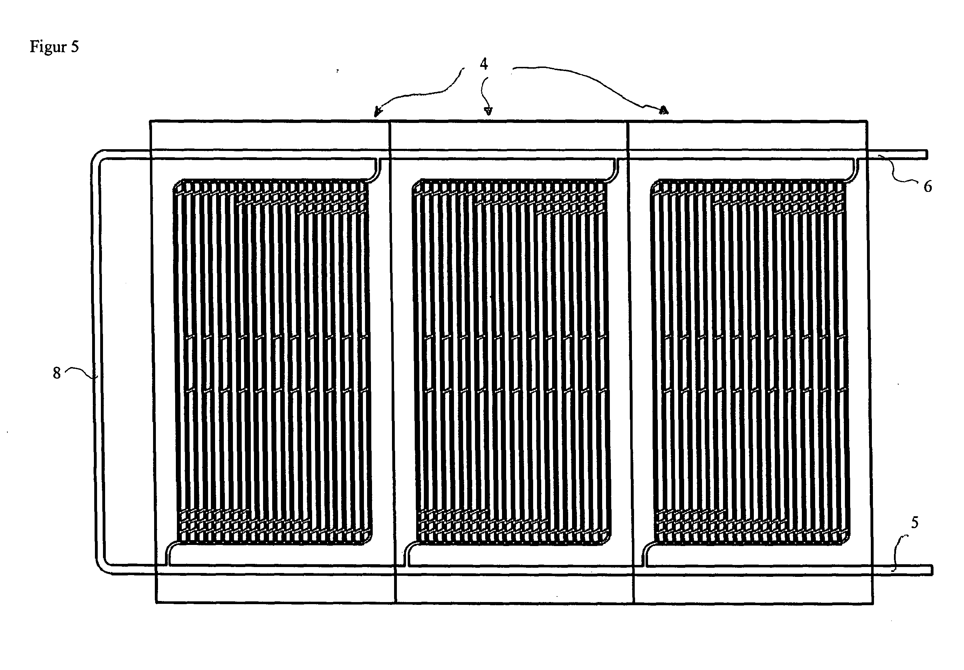

In Figur 5 ist eine Serienschaltung mehrerer Solarabsorber 4 dargestellt. Eine Vorlaufleitung 5 ist mit dem ersten Solarabsorber 4 verbunden. An letzten Solarabsorber 4 verbindet eine Verbindung 8 die Vorlaufleitung 5 mit einer Rücklaufleitung 6.

## Patentansprüche

1. Sammlerrohr (1) eines im Rollbondverfahren hergestellten Solarabsorbers (4), **dadurch gekennzeichnet, dass** das Sammlerrohr (1) aus mehreren parallel verlaufenden Rohren (2), welche über Verbindungen (3) miteinander verbunden sind, besteht.

2. Solarkollektor, welcher aus mehreren in Serie geschalteten Solarabsorbern (4) nach Anspruch 1 besteht.
